(19) Europäisches Patentamt / European Patent Office / Office européen des brevets

(11) **EP 4 567 398 A1**

(12) **EUROPEAN PATENT APPLICATION**
published in accordance with Art. 153(4) EPC

(43) Date of publication:
**11.06.2025 Bulletin 2025/24**

(21) Application number: **23872191.4**

(22) Date of filing: **22.09.2023**

(51) International Patent Classification (IPC):
*G01M 3/02* (2006.01)   *G01M 3/38* (2006.01)
*G06T 7/00* (2017.01)   *G06T 7/254* (2017.01)
*G06V 10/72* (2022.01)   *G06V 10/82* (2022.01)

(52) Cooperative Patent Classification (CPC):
G01M 3/02; G01M 3/38; G06T 7/00; G06T 7/254;
G06V 10/72; G06V 10/82

(86) International application number:
**PCT/JP2023/034559**

(87) International publication number:
**WO 2024/070965 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 JP 2022154745**

(71) Applicant: Mitsubishi Heavy Industries, Ltd.
**Tokyo 100-8332 (JP)**

(72) Inventors:
• **KAMIHARA, Nobuyuki**
  **Tokyo 100-8332 (JP)**
• **ARAKAWA, Yoshiaki**
  **Yokohama-shi, Kanagawa 220-8401 (JP)**

• **INUI, Masayuki**
  **Tokyo 100-8332 (JP)**
• **SHIBUYA, Hidekazu**
  **Tokyo 100-8332 (JP)**
• **KAWAZOE, Kohei**
  **Tokyo 100-8332 (JP)**
• **MORITAKE, Takayuki**
  **Tokyo 100-8332 (JP)**
• **IKEDA, Takashi**
  **Tokyo 100-8332 (JP)**
• **SUZUKI, Keita**
  **Tokyo 100-8332 (JP)**

(74) Representative: **Studio Torta S.p.A.**
**Via Viotti, 9**
**10121 Torino (IT)**

(54) **GAS LEAK DETECTION DEVICE, GAS LEAK DETECTION METHOD, AND GAS LEAK DETECTION PROGRAM**

(57) This gas leak detection device acquires a plurality of pieces of image data obtained by imaging a field in chronological order, and compares the luminance of each pixel in two pieces of image data to evaluate a luminance change for each pixel included in the image data. By integrating the luminance change for each pixel, a luminance change frequency distribution in the image data is calculated. Gas leaking in the field is detected on the basis of the luminance change frequency distribution calculated in this way.

FIG. 2

EP 4 567 398 A1

## Description

Technical Field

The present disclosure relates to a gas leak detection device, a gas leak detection method, and a gas leak detection program.

The present application claims priority based on Japanese Patent Application No. 2022-154745 filed in Japan on September 28, 2022, the contents of which are incorporated herein by reference.

Background Art

For example, a technique for detecting the leak of a gas such as $CO_2$ is known. When the field to be detected is relatively small, it is possible to detect the gas by disposing a sensor capable of sensing the gas in a range in which the gas may leak. On the other hand, when the field to be detected is relatively wide, it is difficult for the sensor for detecting a local gas leak to correspond to the situation. In this case, it is conceivable to detect gas leak in the field by imaging the field with an imaging device such as a camera capable of capturing a wavelength corresponding to a gas to be detected and visualizing the leaking gas.

In the present specification, the term "detection" is a concept including "sensing" and "monitoring", and in a case of detecting a gas leak, the term "detection" also includes a case of acquiring various types of information related to the leak gas, in addition to the presence or absence of the leak gas.

In order to detect a gas leaking in the field based on the captured image in this way, it is necessary to distinguish the background (for example, the ground, a wall of a building, or the like) of the field from a foreground including the gas to be detected. For example, PTL 1 is not a technique related to gas leak detection, but discloses a technique capable of classifying whether each pixel is a background or a foreground by calculating a pixel classification formula in which a Bayesian estimation method is applied as a background occurrence probability and a foreground occurrence probability for a grayscale value of each pixel constituting the captured image.

Citation List

Patent Literature

[PTL 1] Japanese Unexamined Patent Application Publication No. 2010-97507

Summary of Invention

Technical Problem

As described above, it is possible to detect the leak of the gas on the field based on the image data obtained by imaging the field. For example, in a case where $CO_2$ is handled as a gas to be detected, $CO_2$ gas leak detection is performed based on an instantaneous captured image (so-called snapshot) acquired by imaging the field by using an infrared camera capable of capturing $CO_2$ gas. However, depending on the temperature or background of the field, it may be difficult to perform robust gas leak detection with a single captured image.

For example, the infrared camera includes a detection element for detecting infrared rays. In the detection element, the intensity of the infrared rays incident on the infrared camera is detected, and the sensing result is converted into an electrical signal. Thereafter, a captured image is constructed from the distribution of luminance values according to the signal intensity. In such an infrared camera, an electromagnetic wave emitted from the background (for example, the ground, a wall of a building, or the like) of a field and an electromagnetic wave that has passed through a detection target gas ($CO_2$ gas) present between the background of the field and the infrared camera to absorb some energy are detected by the detection element, and a presence region of the detection target gas is visualized based on a difference in intensity between the electromagnetic waves.

Here, the intensity of the electromagnetic wave emitted from a background object changes depending on the temperature of the background object. Therefore, the greater the temperature difference between the background object and the detection target gas, the greater the difference between the intensity of the electromagnetic waves emitted from the background object and the intensity of the electromagnetic wave emitted from the detection target gas, and the detection target gas can be separated from the background object with high sensitivity. On the other hand, in a case where the temperature difference between the background object and the detection target gas is small, the difference between the intensity of the electromagnetic wave emitted from the background object and the intensity of the electromagnetic wave emitted from the detection target gas is small, and it is difficult to separate the detection target gas from the background object (that is, a difference in luminance value between the background object and the detection target gas in the captured image is small, and the contour of a range in which the detection target gas is present is unclear). For example, in a case where an outdoor field is a detection target, the captured image includes soil, sand, grass, or the like as the background object, and the temperatures thereof change according to weather conditions such as sunshine, wind and rain, and temperature. Therefore, it is also conceivable that the temperature difference between the background object and the detection target gas may be small depending on the weather conditions.

At least one embodiment of the present disclosure has been made in view of the above-described circumstances, and an object of the present disclosure is to provide a gas leak detection device, a gas leak detection method, and a gas leak detection program capable of accurately detecting gas leak regardless of a situation in a field.

Solution to Problem

In order to solve the above problems, a gas leak detection device according to at least one embodiment of the present disclosure includes an image data acquisition unit that acquires a plurality of pieces of image data obtained by imaging a field in chronological order; a luminance change evaluation unit that evaluates a luminance change for each pixel included in the image data by comparing a luminance of each pixel between two pieces of the image data before and after each other in chronological order among the plurality of pieces of image data; a luminance change frequency distribution calculation unit that calculates a luminance change frequency distribution in the image data by integrating the luminance change for each pixel; and a gas detection unit that detects a gas leaking in the field based on the luminance change frequency distribution.

In order to solve the above-described problems, a gas leak detection method according to at least one embodiment of the present disclosure includes a step of acquiring a plurality of pieces of image data obtained by imaging a field in chronological order; a step of evaluating a luminance change for each pixel included in the image data by comparing a luminance of each pixel between two pieces of the image data before and after each other in chronological order among the plurality of pieces of image data; a step of calculating a luminance change frequency distribution in the image data by integrating the luminance change for each pixel; and a step of detecting a gas leaking in the field based on the luminance change frequency distribution.

In order to solve the above-described problems, a gas leak detection program according to at least one embodiment of the present disclosure is executable by a computer device, the program causing the computer device to execute a step of acquiring a plurality of pieces of image data obtained by imaging a field in chronological order; a step of evaluating a luminance change for each pixel included in the image data by comparing a luminance of each pixel between two pieces of the image data before and after each other in chronological order among the plurality of pieces of image data; a step of calculating a luminance change frequency distribution in the image data by integrating the luminance change for each pixel; and a step of detecting a gas leaking in the field based on the luminance change frequency distribution.

Advantageous Effects of Invention

According to at least one embodiment of the present disclosure, it is possible to provide a gas leak detection device, a gas leak detection method, and a gas leak detection program capable of accurately detecting gas leak regardless of a situation in a field.

Brief Description of Drawings

Fig. 1 is a schematic view illustrating a UAV mounted with an imaging device that cooperates with a gas leak detection device according to at least one embodiment of the present disclosure from a side.

Fig. 2 is a configuration block diagram illustrating a gas leak detection device according to an embodiment together with the UAV of Fig. 1.

Fig. 3 is a flowchart illustrating a gas leak detection method according to an embodiment.

Fig. 4 is a schematic diagram illustrating a method for calculating a luminance change frequency distribution in step S104 of Fig. 3.

Fig. 5 is a schematic diagram illustrating normalization processing in step S105 of Fig. 3.

Fig. 6 is an example of a luminance change frequency distribution used in step S106 of Fig. 3.

Fig. 7 is a flowchart illustrating a gas leak detection method according to another embodiment.

Fig. 8 is a schematic diagram illustrating binarization processing executed in step S204 of Fig. 7.

Fig. 9 is a configuration block diagram of a gas leak detection device according to another embodiment.

Fig. 10 is a flowchart illustrating a gas leak detection method according to another embodiment.

Fig. 11 is a sub-flowchart of alignment processing executed in step S302 of Fig. 10.

Fig. 12 is a schematic diagram illustrating a state of identifying a feature point in step S402 of Fig. 11.

Description of Embodiments

Hereinafter, some embodiments of the present invention will be described with reference to the accompanying drawings. Dimensions, materials, shapes, relative arrangements, and the like of components described as embodiments or illustrated in the drawings are not intended to limit the scope of the present invention, but are merely explanatory examples.

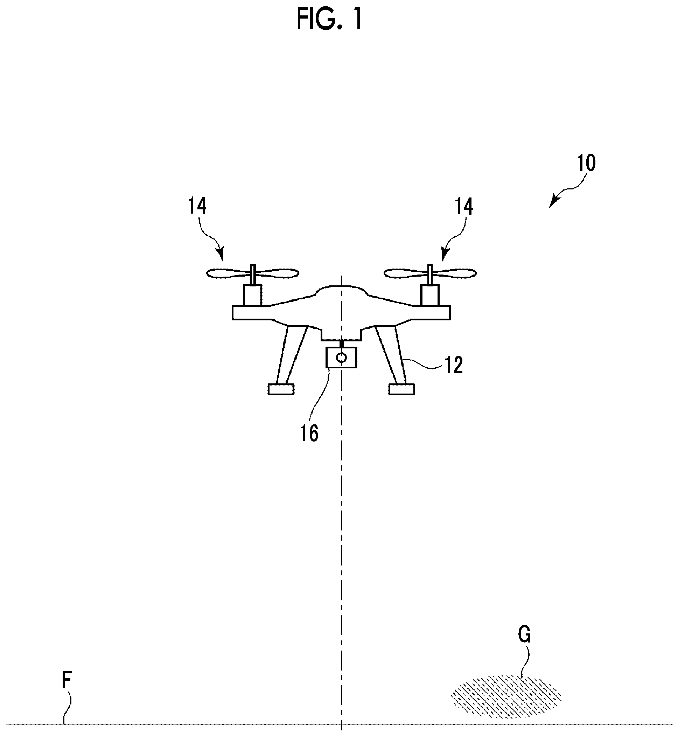

Fig. 1 is a schematic view illustrating an unmanned aerial vehicle (UAV) 10 mounted with an imaging device 16 that cooperates with a gas leak detection device according to at least one embodiment of the present disclosure from a side. The gas leak detection device according to at least one embodiment is a device for detecting a leak (for example, outflow from a ground surface or a facility included in a field F to the atmosphere) of a gas G in a field F. In particular, the gas leak detection device 100 detects a gas leak in the field F by analyzing image data acquired by imaging the field F with an imaging device. In the embodiment described below, a case where an imaging device for imaging image data is mounted on the unmanned aerial vehicle (UAV) 10 will be described as an example. However, the imaging device may be mounted on another moving body or may be mounted on a non-moving body such as a ground surface or a building.

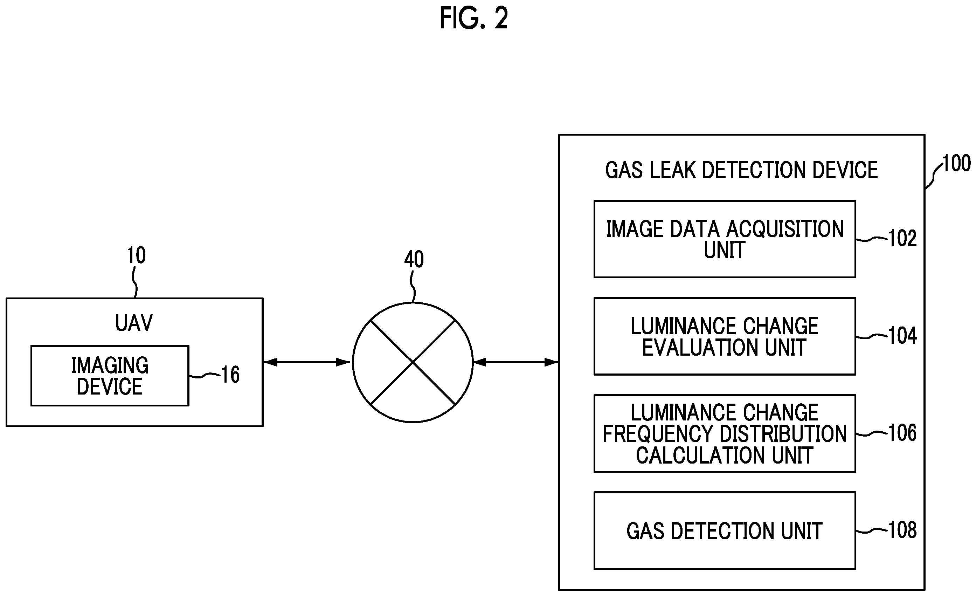

The UAV 10 includes a UAV body 12, a plurality of propellers 14 (normally, three or more propellers 14) attached to the UAV body 12, and an imaging device 16. Each of the plurality of propellers 14 is configured to be rotationally driven by a motor (not illustrated). The flight height, flight speed, flight direction, and the like of the UAV 10 can be controlled by adjusting the current value of each motor for driving the plurality of propellers 14. As will be described below with reference to Fig. 2, a signal indicating the current value of each motor may be sent to the gas leak detection device 100 via a radio communication network 40.

The imaging device 16 is an imaging device including a filter that selectively transmits a wavelength absorbed by a gas to be detected. For example, in a case where $CO_2$ gas is a gas to be detected, the imaging device 16 is an infrared camera including a filter that selectively transmits infrared rays having a wavelength of 4.3 $\mu$m absorbed by the $CO_2$ gas. In this way, by using the imaging device 16 that selectively filters and images a specific wavelength, only a specific gas is imaged as image data for the fluid (gas) in the imaging field of view. Referring to Fig. 2, the image data obtained by the imaging device 16 is sent to the gas leak detection device 100 via the radio communication network 40.

The gas to be detected is not limited to the $CO_2$ gas, and may be another gas capable of absorbing infrared rays, such as methane or ammonia. In addition, the imaging may be performed by the imaging device 16 having an absorption wavelength band other than an infrared region. In this case, any gas having an absorption wavelength band that can be imaged by the imaging device 16 may be a detection target. In addition, in the following description, the detection target is gas, but a medium such as smoke containing fine particles may be used as the detection target.

In addition, the imaging device 16 is configured to be able to acquire a plurality of pieces of image data by imaging the field F in chronological order. For example, the imaging device 16 may be a still camera capable of acquiring a plurality of pieces of image data by repeatedly acquiring still images in chronological order, or may be a video camera capable of acquiring a video composed of a plurality of frame images that are continuous in chronological order corresponding to a predetermined frame frequency (in the video camera, a plurality of frame images constituting the video are handled as a plurality of pieces of image data).

The imaging device 16 is attached to the UAV body 12 so as to be able to image the field F from the UAV 10 in flight. The attachment posture of the imaging device 16 with respect to the UAV body 12 may be fixed or variable. In this way, the imaging device 16 is mounted on the UAV 10 that is a moving body, and moves together with the UAV 10 on the field F, making it possible to detect a gas leak in any range of the field F.

Subsequently, the configuration of the gas leak detection device 100 that functions in cooperation with the UAV 10 having the above configuration will be described. Fig. 2 is a configuration block diagram illustrating the gas leak detection device 100 according to the embodiment together with the UAV 10 of Fig. 1.

The gas leak detection device 100 is configured to include, for example, a central processing unit (CPU), a random access memory (RAM), a read only memory (ROM), and a computer-readable storage medium. A series of processing for realizing various functions is stored in a storage medium or the like in the form of a program as an example, and the CPU reads the program into the RAM or the like to execute information processing/arithmetic processing to realize the various functions. A form installed in advance in the ROM or other storage medium, a form provided in a state of being stored in a computer-readable storage medium, a form of being delivered via wired or wireless communication means, or the like may be applied as the program. The computer-readable storage medium is a magnetic disk, a magneto-optical disk, a CD-ROM, a DVD-ROM, a semiconductor memory, or the like.

In the gas leak detection device 100, each functional block illustrated in Fig. 2 is realized by executing a program stored in a storage medium or the like. Specifically, the gas leak detection device 100 includes an image data acquisition unit 102, a luminance change evaluation unit 104, a luminance change frequency distribution calculation unit 106, and a gas detection unit 108.

The image data acquisition unit 102 is configured to acquire a plurality of pieces of image data obtained by imaging the field F in chronological order. In the present embodiment, the gas leak detection device 100 can communicate with the UAV 10 via the radio communication network 40, and the image data acquisition unit 102 can acquire a plurality of pieces of image data obtained by the imaging device 16 mounted on the UAV 10 via the radio communication network 40.

In a case where the gas leak detection device 100 is provided with a storage device (a memory or the like) for storing a plurality of pieces of image data, each piece of image data obtained by the imaging device 16 may be accumulated in the storage device in association with an imaging time, and the image data acquisition unit 102 may acquire a plurality of pieces of image data by accessing the storage device.

The luminance change evaluation unit 104 is configured to evaluate a luminance change for each pixel included in the image data by comparing the luminance of each pixel between two pieces of image data (hereinafter, referred to as "first image data" and "second image data" as appropriate in a case where the image data is distinguished from each other) before and after each other in chronological order among a plurality of pieces of image data. It is assumed that the plurality of pieces of image data handled by the luminance change evaluation unit 104 have imaging ranges that coincide with each other. In a case where the plurality of pieces of image data acquired by the image data acquisition unit 102 include image data having different imaging ranges, the plurality of pieces of image data are corrected to have the image ranges that coincide with each other by the alignment processing to be described below being executed as preprocessing.

In the present specification, the expression "before and after each other in chronological order" is not limited to a case where two pieces of image data are continuous in chronological order, and also includes a case where other image data is interposed between the two pieces of image data.

Specifically, the luminance change evaluation unit 104 identifies the luminance value (hereinafter, referred to as a "first luminance value" as appropriate) of each pixel of the first image data and the luminance value (hereinafter, referred to as a "second luminance value" as appropriate) of each pixel of the second image data, and calculates the difference (= "first luminance value" - "second luminance value") between the luminance values as the luminance change for each pixel, thereby creating the difference image data. That is, the difference image data is defined as an image in which each pixel has a luminance value corresponding to an absolute value of the "difference between the luminance values" described above.

The luminance change frequency distribution calculation unit 106 is configured to calculate a luminance change frequency distribution in the image data by integrating luminance changes for each pixel. As described above, in a case where the difference image data corresponding to the change in the luminance of each pixel is created, the luminance change frequency distribution is calculated by integrating the luminance values of the respective pixels of the difference image data. Here, the integration means that the luminance change of each pixel is integrated for each pixel for two or more pieces of difference image data before and after each other in chronological order.

In the following embodiment, a case will be described in which the luminance change of each pixel evaluated for a set of pieces (that is, two pieces) of the difference image data before and after each other is integrated. However, the luminance change of each pixel evaluated for any number of pieces of the difference image data of three or more may be integrated.

The gas detection unit 108 is configured to detect gas leaking in the field F based on the luminance change frequency distribution calculated by the luminance change frequency distribution calculation unit 106. In the luminance change frequency distribution, a result obtained by integrating the luminance values corresponding to the luminance change for each pixel is illustrated as the luminance change frequency distribution, and the presence of the gas flowing through the field F is emphasized as compared to the luminance distribution of a single piece of image data. Therefore, the gas detection unit 108 can suitably identify a gas leak location in the field F by detecting the gas flowing through the field F based on a luminance change frequency.

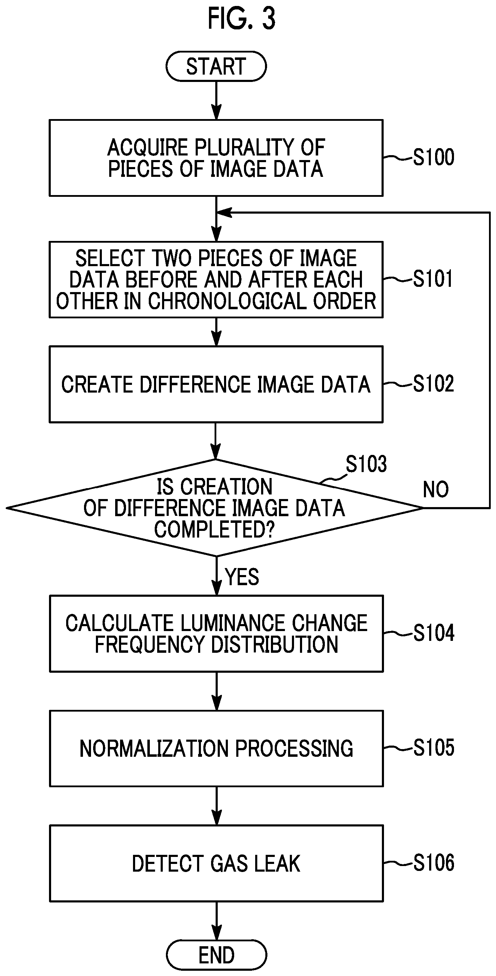

Subsequently, a gas leak detection method executed by the gas leak detection device 100 having the above-described configuration will be described. Fig. 3 is a flowchart illustrating a gas leak detection method according to an embodiment.

First, the image data acquisition unit 102 acquires a plurality of pieces of image data obtained by imaging the field F in chronological order (step S100). In the present embodiment, the imaging device 16 is a video camera, and the image data acquisition unit 102 acquires a plurality of pieces of image data by dividing the video data obtained by the video camera into frames. In addition, noise removal processing or grayscale conversion processing may be executed on the plurality of pieces of image data acquired in step S100 as necessary.

In the present embodiment, the plurality of pieces of image data acquired in step S100 have a common imaging range. The plurality of pieces of image data having a common imaging range in this way can be obtained, for example, by performing imaging with the imaging device 16 mounted on the UAV 10 while hovering the UAV 10 at a predetermined position of the field F.

Subsequently, the luminance change evaluation unit 104 selects two pieces of image data before and after each other in chronological order from the plurality of pieces of image data acquired in step S100 (step S101). In step S101, for example, the plurality of pieces of image data acquired in step S100 are arranged in chronological order, and any two pieces of image data before and after each other are selected.

Subsequently, the luminance change evaluation unit 104 creates difference image data for the two pieces of image data (first image data and second image data) selected in step S101 (step S102). As described above, the difference image data identifies the luminance value (hereinafter, referred to as a "first luminance value" as appropriate) of each pixel of the first image data and the luminance value (hereinafter, referred to as a "second luminance value" as appropriate) of each pixel of the second image data, and is created by calculating a difference (= "first luminance value" - "second luminance value") between the luminance values as a luminance change for each pixel. Then, the luminance value of each pixel is used to create difference image data having an absolute value of the obtained difference.

Subsequently, the gas leak detection device 100 determines whether or not the creation of the difference image data is completed for all the two pieces of image data before and after each other in chronological order for the plurality of pieces of image data acquired in step S100 (step S103). In a case where the creation of the difference image data is not completed for all the two pieces of image data before and after each other in chronological order (step S103: NO), the gas leak detection device 100 returns the process to step S101 to create the difference image data for another two pieces of image data before and after each other in chronological order.

In a case where the creation of the difference image data is completed for all the two image data before and after each other in chronological order (step S103: YES), the luminance change frequency distribution calculation unit 106 calculates a luminance change frequency distribution by integrating the plurality of pieces of difference image data repeatedly created (step S104). The luminance change frequency distribution is obtained by integrating the luminance values of the plurality of pieces of difference image data for each pixel.

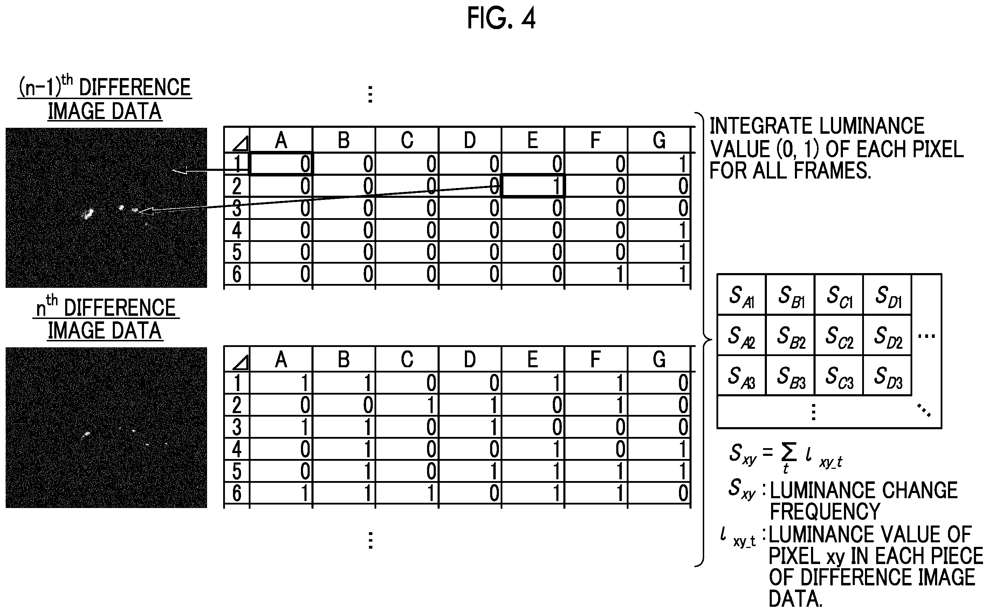

Here, Fig. 4 is a schematic diagram illustrating a method for calculating the luminance change frequency distribution in step S104 of Fig. 3. Fig. 4 illustrates the difference image data at t = $(n-1)^{th}$ and $n^{th}$ frames and a matrix table (row: 1, 2, 3, ..., column: A, B, C, ...) indicating the luminance value of each pixel two-dimensionally arranged in each difference image data. The luminance change frequency distribution calculation unit 106 calculates the luminance change frequency distribution by the following equation by integrating the luminance values for each pixel of the plurality of difference image data.

$$S_{xy} = \sum_{t} l_{xy\_t}$$

Here, $S_{xy}$ is the luminance change frequency of each pixel xy after integration, and $l_{xy\_t}$ is the luminance value of each pixel xy in the $t^{th}$ difference image data.

In addition, Fig. 4 illustrates a case where the luminance value of each pixel in the t = $(n-1)^{th}$ and $n^{th}$ difference image data is binarized into "1" or "0" for ease of understanding.

Subsequently, the luminance change frequency distribution calculation unit 106 performs normalization processing on the luminance change frequency distribution calculated in step S104 (step S105). The normalization processing is the processing of identifying a maximum value from the luminance change frequency distribution calculated in step S105 and performing a normalization calculation such that the maximum value is a predetermined value.

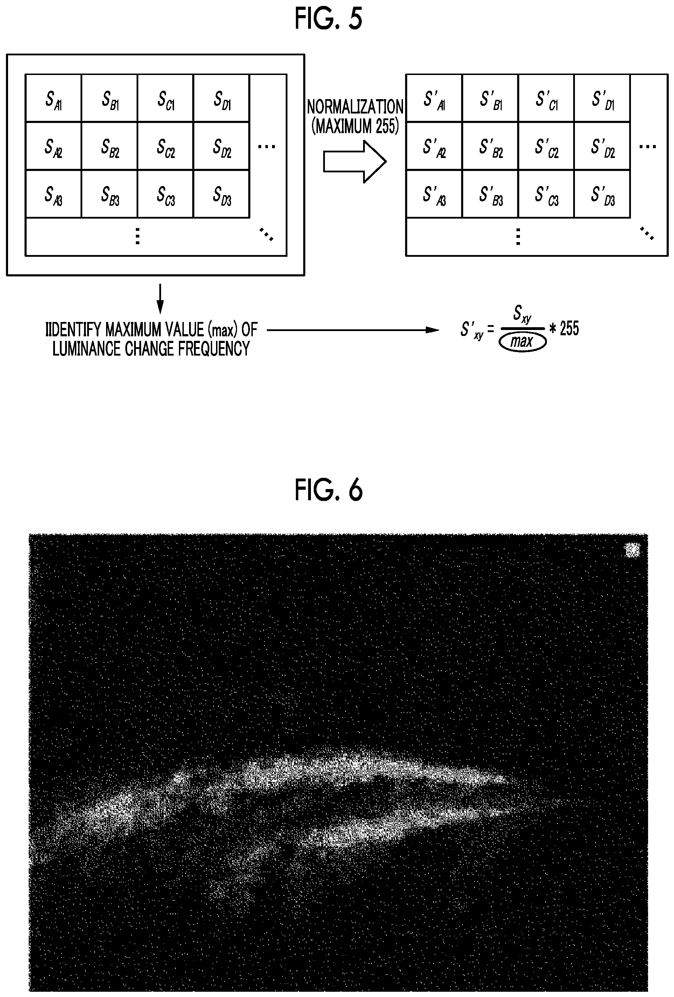

Fig. 5 is a schematic diagram illustrating the normalization processing in step S105 of Fig. 3. Fig. 5 illustrates an example of the luminance change frequency distribution calculated in step S104, and a luminance change frequency $S_{xy}$ corresponding to each pixel xy is illustrated in a matrix form. The luminance change frequency distribution calculation unit 106 identifies a maximum value (max) from the luminance change frequency $S_{xy}$ included in the luminance change frequency distribution, and normalizes the luminance change frequency $S_{xy}$ corresponding to each pixel xy such that the maximum value is a predetermined value (255) (the luminance change frequency $S_{xy}$ after normalization is indicated by a "normalized luminance change frequency $S'_{xy}$).

Subsequently, the gas detection unit 108 detects the leak of the gas based on the luminance change frequency distribution subjected to the normalization processing in step S105 (step S106). In step S106, the luminance change frequency distribution obtained by integrating the luminance change in two pieces of image data before and after each other in chronological order among the plurality of pieces of image data is used, so that the state of the gas leaking on the field F can be more clearly imaged than in a case where the luminance distribution of a single piece of image data is used.

The "detection" of the gas leak in step S106 includes "sensing the presence or absence of the gas leak. In addition, the leak range of the gas, or the like may be detected.

Fig. 6 is an example of the luminance change frequency distribution used in step S106 of Fig. 3. As illustrated in Fig. 6, in the luminance change frequency distribution, pixels with a higher luminance change frequency, which is an integrated value of luminance changes between two pieces of image data before and after each other in chronological order among a plurality of pieces of image data, are displayed with a higher luminance value. The gas detection unit 108 can suitably detect the leak of the gas in the field F by analyzing the luminance change frequency distribution.

In the present embodiment, a case where the gas leak detection is executed based on the luminance change frequency distribution on which the normalization processing has been executed in step S105 has been described. However, in a case where the normalization processing in step S105 is omitted, the gas leak detection may be performed based on the luminance change frequency distribution (that is, the result calculated in step S104) on which the normalization processing is not executed.

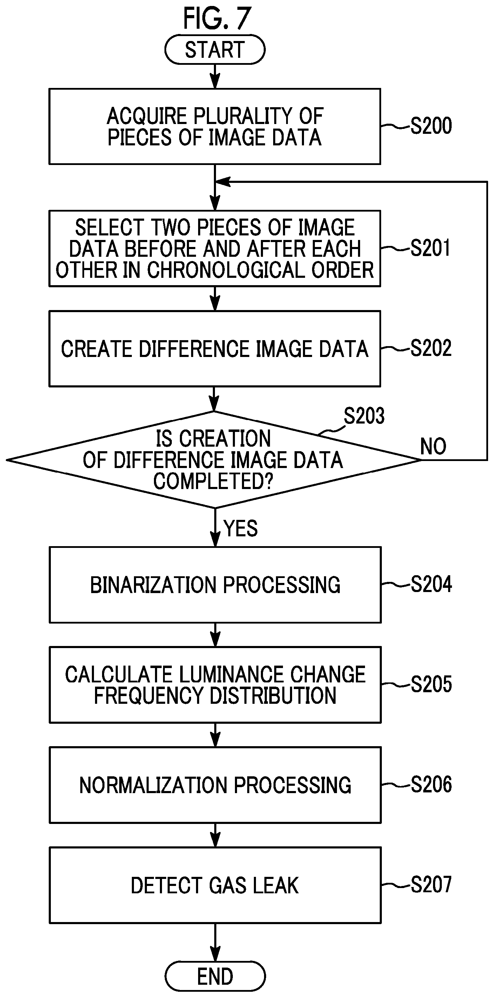

Subsequently, another embodiment of the gas leak detection method described above will be described. Fig. 7 is a flowchart illustrating a gas leak detection method according to another embodiment.

Steps S200 to S203 in Fig. 7 are the same as steps S100 to S103 in Fig. 3, respectively. However, in Fig. 7, in step S204, binarization processing is executed on each of the pieces of difference image data created until S203. For example, the binarization processing is performed as the luminance change evaluation unit 104 compares the luminance of each pixel of the difference image data with a preset threshold value.

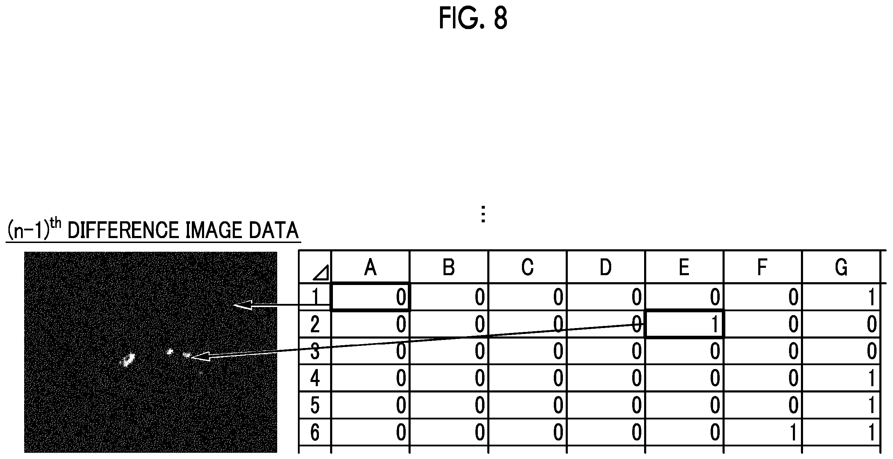

Fig. 8 is a schematic diagram illustrating the binarization processing executed in step S204 of Fig. 7. In the binarization processing, the luminance value is identified for each pixel of the difference image data. In a case where the luminance value is equal to or greater than the threshold value, the luminance value is converted to "1", and in a case where the luminance value is less than the threshold value, the luminance value is converted to "0". Accordingly, as illustrated in Fig. 8, each pixel of the difference image data has either the luminance value "1" or the luminance value "0" after the conversion, and the difference image data becomes a monochrome image by the binarization processing.

In the binarization processing, the difference image data in which pixels having the luminance values equal to or higher than the threshold value are emphasized is obtained. Then, in step S205, the luminance change frequency distribution is calculated by integrating the difference image data in which the binarization processing has been executed in this way, in the same manner as in step S104. In the present embodiment, the luminance change frequency distribution is calculated by integrating the difference image data on which the binarization processing has been executed, so that the luminance change frequency distribution in which the pixels having the luminance value equal to or higher than the threshold value are emphasized is obtained as compared to the above-described embodiment. Therefore, in step S207, the gas leak detection is performed based on the calculated luminance change frequency distribution, so that the gas leak detection with higher accuracy can be performed.

In the present embodiment, the difference image data in which the binarization processing has been executed in step S204 is processed in the same manner as in the above-described embodiment in step S205 and thereafter (that is, steps S205 to S207 in Fig. 7 are the same as steps S104 to S106 in Fig. 3, respectively).

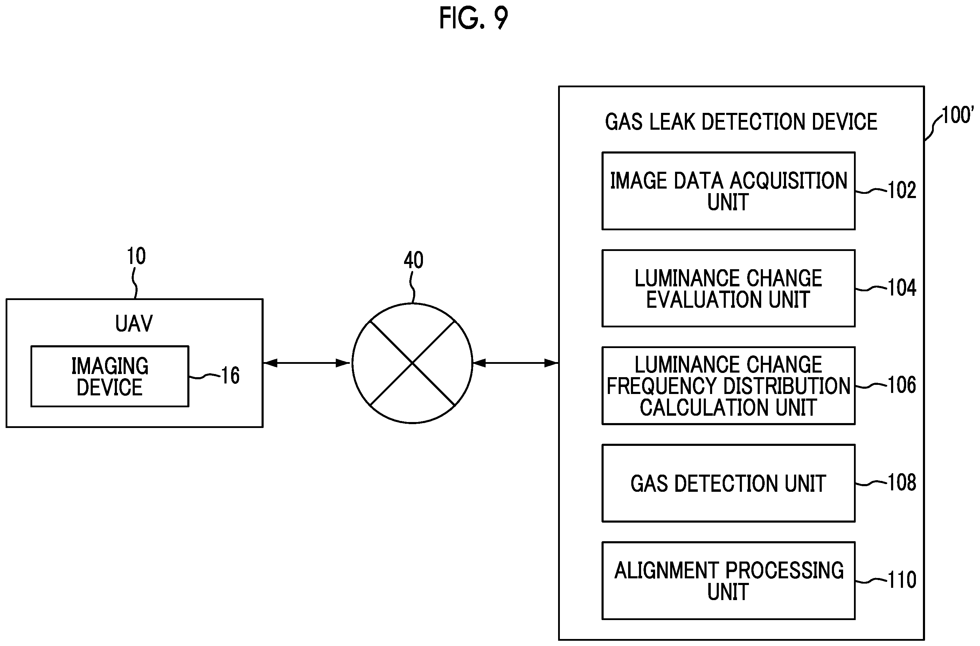

Subsequently, a gas leak detection device 100' according to still another embodiment will be described. Fig. 9 is a configuration block diagram of the gas leak detection device 100' according to another embodiment.

The gas leak detection device 100' illustrated in Fig. 9 is different from the gas leak detection device 100 illustrated in Fig. 2 in that the gas leak detection device 100' includes an alignment processing unit 110. In the present embodiment, for example, as the UAV 10 moves over the field F, the imaging angle of the imaging device 16 mounted on the UAV 10 or the distance to an object (gas leak location) changes, which may result in different imaging ranges of the plurality of pieces of image data. In a case where gas leak detection is performed using such a plurality of pieces of image data, in the gas leak detection device 100 described above, when the luminance change evaluation unit 104 creates the difference image data from the two pieces of image data before and after each other, the luminance change is easily detected even in a region other than the region where the gas is present due to a difference in the imaging range. As a result, there is a high possibility that the gas leak location may be erroneously detected. In order to prevent such erroneous detection, the gas leak detection device 100' according to the present embodiment includes the alignment processing unit 110 for executing the alignment processing as the preprocessing on the plurality of pieces of image data used for creating the difference image data.

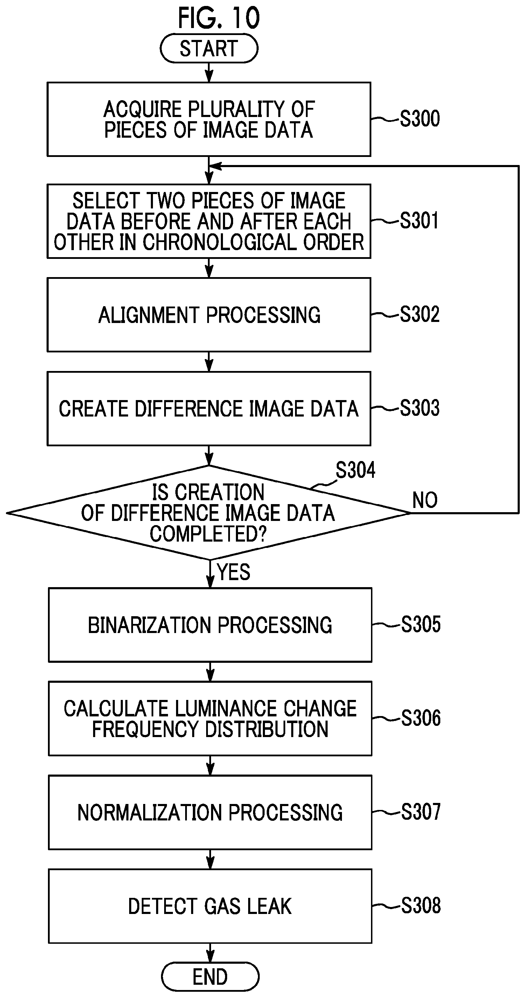

Subsequently, a gas leak detection method according to another embodiment executed by the gas leak detection device 100' having the above-described configuration will be described. Fig. 10 is a flowchart illustrating a gas leak detection method according to another embodiment.

First, steps S300 and S301 are the same as Steps S100 and S101 described above, and the image data acquisition unit 102 acquires a plurality of pieces of image data and selects two pieces of image data before and after each other in chronological order for creating difference image data from the plurality of pieces of image data. Then, the alignment processing unit 110 executes alignment processing on the two pieces of image data selected in step S301 (step S302).

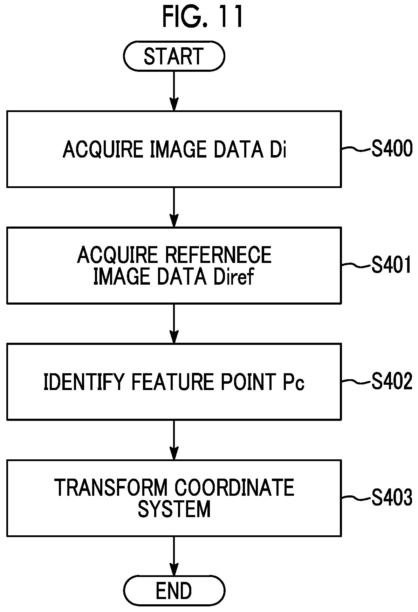

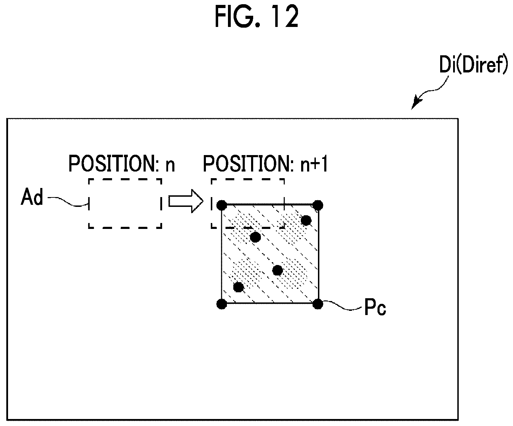

Here, the alignment processing executed in step S302 will be specifically described with reference to Figs. 11 and 12. Fig. 11 is a sub-flowchart of the alignment processing executed in step S302 of Fig. 10, and Fig. 12 is a schematic diagram illustrating a state of identifying a feature point in step S402 of Fig. 11.

First, the alignment processing unit 110 acquires image data Di (two pieces of image data selected in step S301) to be subjected to alignment processing (step S400). The two pieces of image data Di acquired here have an arbitrary coordinate system xyz as described above as the imaging angle and the distance to an object (gas leak location) change.

Subsequently, the alignment processing unit 110 acquires reference image data Diref (step S401). The reference image data Diref is prepared in advance as image data having a reference coordinate system XYZ that serves as a reference for matching the coordinate system xyz of the image data Di on which the alignment processing is executed. The reference image data Diref is stored in a storage device such as a memory, and the alignment processing unit 110 accesses the storage device to acquire the reference image data Diref.

Subsequently, the alignment processing unit 110 identifies a feature point Pc for each of the image data Di acquired in step S400 and the reference image data Diref acquired in step S401 (step S402). The feature point Pc is a coordinate point that serves as a reference when grasping the coordinate system of each image data, and is identified as a point where the amount of luminance change between pixels is large, for example, a corner portion or an edge portion of a structure included in the image.

In the present embodiment, an inspection area Ad is set to include a plurality of pixels with respect to the image data Di (or the reference image data Diref), and when the inspection area Ad is moved, the position where the luminance change amount in the inspection area Ad is larger than a preset reference value is identified as the feature point Pc. In Fig. 12, a part of the field F imaged by the imaging device 16 is illustrated as the image data Di (or reference image data Diref). In the image data, an inspection area Ad having a substantially rectangular shape set to include a plurality of pixels is illustrated in a superimposed manner. The alignment processing unit 110 detects the luminance change amount included in the inspection area Ad while scanning the inspection area Ad on the image data. Specifically, the luminance change amount inside the inspection area Ad when the inspection area Ad is moved from a position n on the field F to a position (n + 1) is detected, and it is determined whether or not the luminance change amount is greater than a preset reference value. As a result, a position where the luminance change amount included in the inspection area Ad is greater than the reference value suggests that some characteristic structure (for example, a corner portion, an edge portion, or the like) is included in the field F, and the alignment processing unit 110 identifies the position as the feature point Pc. In Fig. 12, as some feature points Pc identified in this way, an edge portion and a corner portion of the structure on the field F are illustrated (refer to some black dots illustrated in Fig. 12).

In addition, as another method for identifying the feature point Pc in step S402, a neural network model trained using training data may be used. In this case, training data in which an image pattern and the feature point Pc are associated with each other is prepared, and the neural network model is trained using the training data. The alignment processing unit 110 inputs the image data Di (or the reference image data Diref) to the neural network model constructed in this way. The neural network model distinguishes the contrast (black and white), a corner portion, an edge portion, and the like in the input image data Di (or reference image data Diref) from the information of a hidden layer constructed by training using training data, and outputs the feature point Pc.

The training data used for training the neural network model may be prepared individually, but for example, a plurality of pieces of data created by rotating a specific sample image around a central axis may be prepared. Accordingly, a large amount of training data can be created from a limited sample image serving as a base.

Subsequently, the alignment processing unit 110 transforms the coordinate system xyz of the image data Di into the coordinate system XYZ of the reference image data Diref based on the feature point Pc identified in step S402 (step S403). Specifically, in step S403, an affine transformation array for affinely transforming the coordinate system xyz of the image data Di into the coordinate system XYZ of the reference image data Diref such that the feature point Pc identified in the image data Di coincides with the feature point Pc identified in the reference image data Diref is obtained, and the alignment processing is executed by applying the affine transformation array to the image data Di.

For example, the affine transformation array used in step S403 may be obtained by using a pre-constructed deep neural network model. In this case, for example, several model cases in which predetermined image data is manually matched with reference image data using the affine transformation array are prepared to create a database, and the deep neural network model is trained using this database as training data. In this case, for example, the luminance change amount of the feature point Pc identified by the reference image data Diref can be used as the loss function of the deep learning. The alignment processing unit 110 inputs the image data Di and the reference image data Diref to the deep neural network model constructed in this way, so that an appropriate affine transformation array can be obtained with a small calculation load (for example, affine transformation can be immediately obtained even for unintended fluctuations of the UAV 10, and alignment with respect to each frame image can be performed).

In this way, in step S302, alignment processing is executed on the two pieces of image data selected in step S301, so that the coordinate system xyz of each piece of image data is aligned with the coordinate system XYZ of the reference image data. Returning to Fig. 10, in the subsequent step S303, the difference image data is created by using the two pieces of image data for which the alignment processing has been executed. The following steps S304 to S308 are the same as steps S103 to S106 described above, and processing has been executed using the image data for which the alignment processing has been executed in this way, so that erroneous detection is unlikely to occur and gas leak can be detected with high accuracy.

As described above, according to the above-described embodiment, the luminance change for each pixel is evaluated by comparing the luminance of each pixel between two pieces of image data before and after each other in chronological order in the plurality of pieces of image data acquired by imaging the field F in chronological order. As the luminance change of each pixel is integrated over each combination of two pieces of image data that are included in the plurality of pieces of image data before and after each other in chronological order, the luminance change frequency distribution is obtained. The luminance change frequency distribution calculated in this way is emphasized such that a pixel where a luminance change is likely to occur due to the gas flowing through the field F has a larger luminance change frequency value. Therefore, by performing gas sensing based on the luminance change frequency distribution, it is possible to accurately detect gas leak in the field F regardless of the situation in the field F (for example, an object, a temperature, or the like included as a background).

For example, the contents described in each embodiment are understood as follows.

(1) A gas leak detection device according to one aspect includes an image data acquisition unit that acquires a plurality of pieces of image data obtained by imaging a field in chronological order; a luminance change evaluation unit that evaluates a luminance change for each pixel included in the image data by comparing a luminance of each pixel between two pieces of the image data before and after each other in chronological order among the plurality of pieces of image data; a luminance change frequency distribution calculation unit that calculates a luminance change frequency distribution in the image data by integrating the luminance change for each pixel; and a gas detection unit that detects a gas leaking in the field based on the luminance change frequency distribution.

According to the above aspect (1), the luminance change for each pixel is evaluated by comparing the luminance of each pixel between two pieces of image data before and after each other in chronological order among the plurality of pieces of image data acquired by imaging the field in chronological order. As the luminance change of each pixel is integrated over each combination of two pieces of image data that are included in the plurality of pieces of image data before and after each other in chronological order, the luminance change frequency distribution is obtained. The luminance change frequency distribution calculated in this way is emphasized such that a pixel where a luminance change due to the gas flowing in the field is likely to occur has a larger luminance change frequency value. Therefore, by performing gas sensing based on the luminance change frequency distribution, it is possible to accurately detect gas leak in the field regardless of the situation in the field F (for example, an object, a temperature, or the like included as a background).

(2) In another aspect, in the above aspect (1), the luminance change evaluation unit generates difference image data between the two pieces of image data, and the luminance change frequency distribution calculation unit calculates the luminance change frequency distribution by integrating the difference image data.

According to the above aspect (2), the difference image data in which the luminance change of each pixel is used as the luminance value of each pixel is created for the two pieces of image data before and after each other in chronological order. By integrating the difference image data created in this way for each combination of two pieces of image data before and after each other in chronological order included in the plurality of pieces of image data, it is possible to suitably obtain a luminance change frequency distribution from which the presence region of the gas in the field can be determined favorably.

(3) In another aspect, in the above aspect (2), the luminance change evaluation unit performs binarization processing on the difference image data by comparing the luminance of each pixel of the difference image data with a threshold value set in advance.

According to the above aspect (3), the binarization processing of comparing the luminance of each pixel with the threshold value is executed on the difference image data. By integrating the difference image data on which such binarization processing is executed, it is possible to obtain a luminance change frequency distribution in which a region where gas flowing in the field is present is further emphasized.

(4) In another aspect, in the aspect according to any one of the above (1) to (3), the gas detection unit visualizes the luminance change frequency distribution as a gas distribution image having a pixel luminance value corresponding to a magnitude of the luminance change frequency.

According to the above aspect (4), the luminance change frequency distribution is visualized so as to have a pixel luminance value corresponding to the luminance change frequency. The luminance change frequency distribution visualized in this way can be used as a gas distribution image indicating a range in which gas flowing in the field is present.

(5) In another aspect, in the aspect according to any one of the above (1) to (4), an alignment processing unit that executes alignment processing for aligning a coordinate system of the plurality of pieces of image data with a reference coordinate system of reference image data acquired in advance is further included.

According to the above aspect (5), the alignment processing is executed on the plurality of pieces of image data, so that the coordinate system of each piece of image data is aligned with the reference coordinate system of the reference image data. Accordingly, for example, since a plurality of pieces of image data are imaged while moving, even in a case where the coordinate system of each piece of image data deviates from the reference coordinate system, the luminance change frequency distribution for detecting the gas leak can be calculated based on the plurality of pieces of image data for which the alignment processing has been executed.

(6) In another aspect, in the above aspect (5), the alignment processing is performed by an affine transformation for transforming the coordinate system into the reference coordinate system such that feature points included in the plurality of pieces of image data and the reference image data coincide with each other.

According to the above aspect (6), the alignment processing can be performed by the feature point included in the plurality of pieces of image data being affine-transformed to coincide with the feature point included in the reference image data.

(7) In another aspect, in the above aspect (6), the feature point is identified as a position where a luminance change amount in an inspection area set to include a plurality of pixels is greater than a reference value when the inspection area is moved in the plurality of pieces of image data and the reference image data.

According to the above aspect (7), it is possible to suitably identify the feature point used for the alignment processing from the image data and the reference image data as the position where the luminance change amount when the inspection area set to include the plurality of pieces of images is moved is greater than the reference point.

(8) In another aspect, in the above aspect (6), the feature point is identified from the plurality of pieces of image data and the reference image data by using a neural network model trained using training data.

According to the above aspect (8), the feature point used for the alignment processing can be suitably identified from the image data and the reference image data by analyzing the image data and the reference image data using the trained neural network model.

(9) In another aspect, in the above aspect (8), the training data includes a plurality of pieces of data created by rotating a sample image around a central axis.

According to the above aspect (9), the training data used for training the neural network model used for identifying the feature point used for the alignment processing from the image data and the reference image data is prepared as a plurality of pieces of data created by rotating the sample image around the central axis. Accordingly, a large amount of training data can be efficiently created based on a relatively small number of sample images.

(10) In another aspect, in the above aspect (6) the affine transformation is performed by using an affine array obtained by inputting the plurality of pieces of image data and the reference image data to a pre-constructed deep neural network model.

According to the above aspect (10), by inputting the plurality of pieces of image data and the reference image data to the deep neural network model, an affine array for aligning a coordinate system corresponding to the plurality of pieces of image data with a reference coordinate system corresponding to the reference image data is output. Accordingly, since the affine array required for the alignment processing can be obtained with a small calculation load, the processing is suitable for speedup.

(11) In another aspect, in the aspect according to any one of the above (1) to (10), the plurality of pieces of image data are imaged by an imaging device mounted on a moving body.

According to the above aspect (11), the leak of the gas on the field can be suitably detected based on the plurality of pieces of image data imaged by the imaging device mounted on the moving body.

(12) In another aspect, in the aspect according to any one of the above (1) to (11), the plurality of pieces of image data are obtained by imaging the field with an infrared camera.

According to the aspect of the above (12), it is possible to suitably detect leak of a gas such as $CO_2$ gas on the field based on a plurality of pieces of image data imaged by the infrared camera.

(13) In another aspect, in the aspect according to any one of the above (1) to (12), the plurality of pieces of image data are a plurality of frame images constituting video data.

According to the above aspect (13), by handling the plurality of frame images constituting the video data as the plurality of pieces of image data described above, it is possible to suitably detect the leak of the gas on the field based on the video data.

(14) A gas leak detection method according to one aspect includes a step of acquiring a plurality of pieces of image data obtained by imaging a field in chronological order; a step of evaluating a luminance change for each pixel included in the image data by comparing a luminance of each pixel between two pieces of the image data before and after each other in chronological order among the plurality of pieces of image data; a step of calculating a luminance change frequency distribution in the image data by integrating the luminance change for each pixel; and a step of detecting a gas leaking in the field based on the luminance change frequency distribution.

According to the above aspect (14), the luminance change for each pixel is evaluated by comparing the luminance of each pixel between two pieces of image data before and after each other in chronological order among the plurality of pieces of image data acquired by imaging the field in chronological order. As the luminance change of each pixel is integrated over each combination of two pieces of image data that are included in the plurality of pieces of image data before and after each other in chronological order, the luminance change frequency distribution is obtained. The luminance change frequency distribution calculated in this way is emphasized such that a pixel where a luminance change due to the gas flowing in the field is likely to occur has a larger luminance change frequency value. Therefore, by performing gas sensing based on the luminance change frequency distribution, it is possible to accurately detect gas leak in the field regardless of the situation in the field F (for example, an object, a temperature, or the like included as a background).

(15) A gas leak detection program according to one aspect is executable by a computer device, the program causing the computer device to execute a step of acquiring a plurality of pieces of image data obtained by imaging a field in chronological order; a step of evaluating a luminance change for each pixel included in the image data by comparing a luminance of each pixel between two pieces of the image data before and after each other in chronological order among the plurality of pieces of image data; a step of calculating a luminance change frequency distribution in the image data by integrating the luminance change for each pixel; and a step of detecting a gas leaking in the field based on the luminance change frequency distribution.

According to the above aspect (15), the luminance change for each pixel is evaluated by comparing the luminance of each pixel between two pieces of image data before and after each other in chronological order among the plurality of pieces of image data acquired by imaging the field in chronological order. As the luminance change of each pixel is integrated over each combination of two pieces of image data that are included in the plurality of pieces of image data before and after each other in chronological order, the luminance change frequency distribution is obtained. The luminance change frequency distribution calculated in this way is emphasized such that a pixel where a luminance change due to the gas flowing in the field is likely to occur has a larger luminance change frequency value. Therefore, by performing gas sensing based on the luminance change frequency distribution, it is possible to accurately detect gas leak in the field regardless of the situation in the field F (for example, an object, a temperature, or the like included as a background).

Reference Signs List

10: AUV
12: body
14: propeller
16: imaging device
40: radio communication network
100: gas leak detection device
102: image data acquisition unit
104: luminance change evaluation unit
106: luminance change frequency distribution calculation unit
108: gas detection unit
110: alignment processing unit

**Claims**

1. A gas leak detection device comprising:

    an image data acquisition unit that acquires a plurality of pieces of image data obtained by imaging a field in chronological order;
    a luminance change evaluation unit that evaluates a luminance change for each pixel included in the image data by comparing a luminance of each pixel between two pieces of the image data before and after each other in chronological order among the plurality of pieces of image data;
    a luminance change frequency distribution calculation unit that calculates a luminance change frequency distribution in the image data by integrating the luminance change for each pixel; and
    a gas detection unit that detects a gas leaking in the field based on the luminance change frequency distribution.

2. The gas leak detection device according to claim 1,

    wherein the luminance change evaluation unit generates difference image data between the two pieces of image data, and
    the luminance change frequency distribution calculation unit calculates the luminance change frequency distribution by integrating the difference image data.

3. The gas leak detection device according to claim 2, wherein the luminance change evaluation unit performs binarization processing on the difference image data by comparing the luminance of each pixel of the difference image data with a threshold value set in advance.

4. The gas leak detection device according to claim 1 or 2,
    wherein the gas detection unit visualizes the luminance change frequency distribution as a gas distribution image having a pixel luminance value corresponding to a magnitude of the luminance change.

5. The gas leak detection device according to claim 1 or 2, further
    comprising:
    an alignment processing unit that executes alignment processing for aligning a coordinate system of the plurality of pieces of image data with a reference coordinate system of reference image data acquired in advance.

6. The gas leak detection device according to claim 5, wherein the alignment processing is performed by an affine transformation for transforming the coordinate system into the reference coordinate system such that feature points included in the plurality of pieces of image data and the reference image data coincide with each other.

7. The gas leak detection device according to claim 6, wherein the feature point is identified as a position where a luminance change amount in an inspection area set to include a plurality of pixels is greater than a reference value when the inspection area is moved in the plurality of pieces of image data and the reference image data.

8. The gas leak detection device according to claim 6, wherein the feature point is identified from the plurality of pieces of image data and the reference image data by using a neural network model trained using training data.

9. The gas leak detection device according to claim 8, wherein the training data includes a plurality of pieces of data created by rotating a sample image around a central axis.

10. The gas leak detection device according to claim 6, wherein the affine transformation is performed by using an affine array obtained by inputting the plurality of pieces of image data and the reference image data to a pre-constructed deep neural network model.

11. The gas leak detection device according to claim 1 or 2,
wherein the plurality of pieces of image data are imaged by an imaging device mounted on a moving body.

12. The gas leak detection device according to claim 1 or 2,
wherein the plurality of pieces of image data are obtained by imaging the field with an infrared camera.

13. The gas leak detection device according to claim 1 or 2,
wherein the plurality of pieces of image data are a plurality of frame images constituting video data.

14. A gas leak detection method comprising:

a step of acquiring a plurality of pieces of image data obtained by imaging a field in chronological order;
a step of evaluating a luminance change for each pixel included in the image data by comparing a luminance of each pixel between two pieces of the image data before and after each other in chronological order among the plurality of pieces of image data;
a step of calculating a luminance change frequency distribution in the image data by integrating the luminance change for each pixel; and
a step of detecting a gas leaking in the field based on the luminance change frequency distribution.

15. A gas leak detection program executable by a computer device,
the program causing the computer device to execute:

a step of acquiring a plurality of pieces of image data obtained by imaging a field in chronological order;
a step of evaluating a luminance change for each pixel included in the image data by comparing a luminance of each pixel between two pieces of the image data before and after each other in chronological order among the plurality of pieces of image data;
a step of calculating a luminance change frequency distribution in the image data by integrating the luminance change for each pixel; and
a step of detecting a gas leaking in the field based on the luminance change frequency distribution.

FIG. 1

FIG. 2

GAS LEAK DETECTION DEVICE — 100

IMAGE DATA ACQUISITION UNIT — 102

LUMINANCE CHANGE EVALUATION UNIT — 104

LUMINANCE CHANGE FREQUENCY DISTRIBUTION CALCULATION UNIT — 106

GAS DETECTION UNIT — 108

UAV — 10

IMAGING DEVICE — 16

40

EP 4 567 398 A1

## FIG. 3

START

ACQUIRE PLURALITY OF PIECES OF IMAGE DATA — S100

SELECT TWO PIECES OF IMAGE DATA BEFORE AND AFTER EACH OTHER IN CHRONOLOGICAL ORDER — S101

CREATE DIFFERENCE IMAGE DATA — S102

IS CREATION OF DIFFERENCE IMAGE DATA COMPLETED? — S103

NO

YES

CALCULATE LUMINANCE CHANGE FREQUENCY DISTRIBUTION — S104

NORMALIZATION PROCESSING — S105

DETECT GAS LEAK — S106

END

# FIG. 4

(n-1)th DIFFERENCE IMAGE DATA

INTEGRATE LUMINANCE VALUE (0, 1) OF EACH PIXEL FOR ALL FRAMES.

| ◸ | A | B | C | D | E | F | G |
|---|---|---|---|---|---|---|---|
| 1 | 0 | 0 | 0 | 0 | 0 | 0 | 1 |
| 2 | 0 | 0 | 0 | 0 | 1 | 0 | 0 |
| 3 | 0 | 0 | 0 | 0 | 0 | 0 | 0 |
| 4 | 0 | 0 | 0 | 0 | 0 | 0 | 1 |
| 5 | 0 | 0 | 0 | 0 | 0 | 0 | 1 |
| 6 | 0 | 0 | 0 | 0 | 0 | 1 | 1 |

nth DIFFERENCE IMAGE DATA

| ◸ | A | B | C | D | E | F | G |
|---|---|---|---|---|---|---|---|
| 1 | 1 | 1 | 0 | 0 | 1 | 1 | 0 |
| 2 | 0 | 0 | 1 | 1 | 0 | 1 | 0 |
| 3 | 1 | 1 | 0 | 1 | 0 | 0 | 0 |
| 4 | 0 | 1 | 0 | 0 | 1 | 0 | 1 |
| 5 | 0 | 1 | 0 | 1 | 1 | 1 | 1 |
| 6 | 1 | 1 | 1 | 0 | 1 | 1 | 0 |

| $S_{A1}$ | $S_{B1}$ | $S_{C1}$ | $S_{D1}$ | |
|---|---|---|---|---|
| $S_{A2}$ | $S_{B2}$ | $S_{C2}$ | $S_{D2}$ | ... |
| $S_{A3}$ | $S_{B3}$ | $S_{C3}$ | $S_{D3}$ | |

$$S_{xy} = \sum_t l_{xy\_t}$$

$S_{xy}$ : LUMINANCE CHANGE FREQUENCY

$l_{xy\_t}$ : LUMINANCE VALUE OF PIXEL xy IN EACH PIECE OF DIFFERENCE IMAGE DATA.

EP 4 567 398 A1

# FIG. 5

| | | | | |
|---|---|---|---|---|
| $S_{A1}$ | $S_{B1}$ | $S_{C1}$ | $S_{D1}$ | |
| $S_{A2}$ | $S_{B2}$ | $S_{C2}$ | $S_{D2}$ | ... |
| $S_{A3}$ | $S_{B3}$ | $S_{C3}$ | $S_{D3}$ | |
| | : | | | ∴ |

NORMALIZATION
(MAXIMUM 255)

⇨

| | | | | |
|---|---|---|---|---|
| $S'_{A1}$ | $S'_{B1}$ | $S'_{C1}$ | $S'_{D1}$ | |
| $S'_{A2}$ | $S'_{B2}$ | $S'_{C2}$ | $S'_{D2}$ | ... |
| $S'_{A3}$ | $S'_{B3}$ | $S'_{C3}$ | $S'_{D3}$ | |
| | : | | | ∴ |

IIDENTIFY MAXIMUM VALUE (max) OF
LUMINANCE CHANGE FREQUENCY

⟶

$$S'_{xy} = \frac{S_{xy}}{max} * 255$$

# FIG. 6

## FIG. 7

START

ACQUIRE PLURALITY OF PIECES OF IMAGE DATA —S200

SELECT TWO PIECES OF IMAGE DATA BEFORE AND AFTER EACH OTHER IN CHRONOLOGICAL ORDER —S201

CREATE DIFFERENCE IMAGE DATA —S202

IS CREATION OF DIFFERENCE IMAGE DATA COMPLETED? S203 — NO

YES

BINARIZATION PROCESSING —S204

CALCULATE LUMINANCE CHANGE FREQUENCY DISTRIBUTION —S205

NORMALIZATION PROCESSING —S206

DETECT GAS LEAK —S207

END

EP 4 567 398 A1

## FIG. 8

$(n-1)^{th}$ DIFFERENCE IMAGE DATA

| ◿ | A | B | C | D | E | F | G |
|---|---|---|---|---|---|---|---|
| 1 | 0 | 0 | 0 | 0 | 0 | 0 | 1 |
| 2 | 0 | 0 | 0 | 0 | 1 | 0 | 0 |
| 3 | 0 | 0 | 0 | 0 | 0 | 0 | 0 |
| 4 | 0 | 0 | 0 | 0 | 0 | 0 | 1 |
| 5 | 0 | 0 | 0 | 0 | 0 | 0 | 1 |
| 6 | 0 | 0 | 0 | 0 | 0 | 1 | 1 |

FIG. 9

## FIG. 10

START

ACQUIRE PLURALITY OF PIECES OF IMAGE DATA — S300

SELECT TWO PIECES OF IMAGE DATA BEFORE AND AFTER EACH OTHER IN CHRONOLOGICAL ORDER — S301

ALIGNMENT PROCESSING — S302

CREATE DIFFERENCE IMAGE DATA — S303

IS CREATION OF DIFFERENCE IMAGE DATA COMPLETED? — S304 — NO

YES

BINARIZATION PROCESSING — S305

CALCULATE LUMINANCE CHANGE FREQUENCY DISTRIBUTION — S306

NORMALIZATION PROCESSING — S307

DETECT GAS LEAK — S308

END

## FIG. 11

START

ACQUIRE IMAGE DATA Di ～S400

ACQUIRE REFERNECE
IMAGE DATA Diref ～S401

IDENTIFY FEATURE POINT Pc ～S402

TRANSFORM COORDINATE
SYSTEM ～S403

END

# FIG. 12

## INTERNATIONAL SEARCH REPORT

| | International application No. |
|---|---|
| | **PCT/JP2023/034559** |

| | |
|---|---|
| **A.** | **CLASSIFICATION OF SUBJECT MATTER** |

***G01M 3/02***(2006.01)i; ***G01M 3/38***(2006.01)i; ***G06T 7/00***(2017.01)i; ***G06T 7/254***(2017.01)i; ***G06V 10/72***(2022.01)i; ***G06V 10/82***(2022.01)i

FI:   G06T7/254 A; G06T7/00 350C; G06V10/82; G06V10/72; G01M3/02 M; G01M3/38 H

According to International Patent Classification (IPC) or to both national classification and IPC

| | |
|---|---|
| **B.** | **FIELDS SEARCHED** |

Minimum documentation searched (classification system followed by classification symbols)

G01M3/02; G01M3/38; G06T7/00; G06T/254; G06V10/72; G06V10/82

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2017/213075 A1 (KONICA MINOLTA, INC.) 14 December 2017 (2017-12-14) paragraphs [0006], [0012], [0037], [0063]-[0064] | 1-4, 11-15 |
| Y | | 5-6, 8-10 |
| A | | 7 |
| Y | 江尻 正員, ディジタル画像処理 ［改訂新版］ 第一版 DIGITAL IMAGE PROCESSING, 公益財団法人画像情報教育振興協会 （ＣＧ－ＡＲＴＳ協会） 松阪 喜幸, 09 March 2015, pp. 163-167, 172-178, 234-237 pp. 163-167, 172-178, 234-237, (EJIRI, Masakazu), non-official translation (DIGITAL IMAGE PROCESSING [newly revised edition] 1st edition. COMPUTER GRAPHIC ARTS SOCIETY (CG-ARTS) MATSUSAKA, Yoshiyuki.) | 5-6, 8-10 |
| Y | WO 2019/064599 A1 (NEC CORPORATION) 04 April 2019 (2019-04-04) paragraphs [0037]-[0042] | 10 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/034559**

| Patent document cited in search report | | | Publication date (day/month/year) | Patent family member(s) | Publication date (day/month/year) |
|---|---|---|---|---|---|
| WO | 2017/213075 | A1 | 14 December 2017 | US 2020/0041406 A1 paragraphs [0006], [0033], [0058], [0081]-[0082] | |
| WO | 2019/064599 | A1 | 04 April 2019 | US 2020/0311894 A1 paragraphs [0061]-[0065] | |

Form PCT/ISA/210 (patent family annex) (January 2015)

**EP 4 567 398 A1**

**Patent documents cited in the description**

- JP 2022154745 A
- JP 2010097507 A